# EUROPEAN PATENT APPLICATION

(11) **EP 3 533 632 A1**
(43) Date of publication of application: **04.09.2019**
(21) Application number: 17865434.9
(22) Date of filing: 08.06.2017
(51) Int. Cl.: B60C 11/16

(54) **STUD PIN, AND PNEUMATIC TIRE PROVIDED WITH STUD PIN**

(30) Priority: 26.10.2016 JP 2016209206
(71) Applicant: TOYO TIRE CORPORATION, Itami-shi, Hyogo 6640847 (JP)
(72) Inventor: IKUNO, Yusuke, Hyogo 664-0847 (JP)
(74) Representative: Eisenführ Speiser
(86) International application number: PCT/JP2017/021236
(87) International publication number: WO 2018/078940

(57) **Abstract**

Provided is a stud pin including: a cylindrical body 2 extending in a center axis direction; and a base arranged on the side of one end of the body. In a plan view, the base 2 is divided into a first region and a second region by a transverse axis perpendicular to the center axis, and a linear part 9 parallel to the transverse axis is formed on the outer periphery of the first region, whereby the base 2 is formed asymmetrically about the transverse axis along a longitudinal axis direction perpendicular to the transverse axis.

## Description

### TECHNICAL FIELD

The present invention relates to a stud pin, and a pneumatic tire comprising the stud pin.

### BACKGROUND ART

Conventionally, as a stud pin, one having a constitution that includes a body which has a trapezoidal shape in a plan view and a base which is arranged on the lower end of the base and similarly has a trapezoidal shape in a plan view is known (see Patent Literature 1).

### CITATION LIST

### PATENT LITERATURE

Patent Literature 1: WO 2014/122570 A1

### SUMMARY OF INVENTION

### TECHNICAL PROBLEM

However, in the above-described conventional stud pin, the distances between the center axis of the base and two sides are substantially equal. In addition, since the body also has a trapezoidal shape in a plan view, the degree of adhesion with pin holes of a tire is variable. Therefore, when a force is applied from the road surface via an edge of the body, the stud pin is likely to fall out of a pin hole. Accordingly, the upper-end periphery of the body is not expected to exert a sufficient edge effect on a road surface.

A object of the present invention is to provide: a stud pin which has excellent resistance to falling out of a pin hole and is capable of exerting a sufficient edge effect through its body on a road surface; and a pneumatic tire comprising the stud pin.

### SOLUTION TO PROBLEM

As means for solving the above-described problem, the present invention provides a stud pin comprising: a cylindrical body extending in a center axis direction; and a base arranged on the side of one end of the body, which base in a plan view is divided into a first region and a second region by a transverse axis perpendicular to the center axis and is formed asymmetrically about the transverse axis by formation of a linear part parallel to the transverse axis on the outer periphery of the first region.

According to this constitution, in a state where the stud pin is mounted in a pin hole of a tire, since the body is cylindrical, it tightly adheres to the inner surface of the pin hole and thereby stabilizes the retention state. In addition, since the base has an asymmetrical shape, appropriate retainability is ensured in various directions by changing the mounting orientation. Further, since the base has a linear part, it inhibits displacement against a force acting in the rotational direction. In this manner, since the stud pin is configured to have appropriate retainability, the edge effect attributed to the upper-end periphery of the body can be sufficiently exerted.

The base preferably has a greater length in a longitudinal axis direction perpendicular to the transverse axis than in the transverse axis direction in a plan view.

By this constitution, sufficient retainability can be maintained against a force acting in the longitudinal axis direction.

The base preferably has inclined parts that are inclined toward the longitudinal axis from the respective sides of the transverse axis direction.

By this constitution, the retainability in the longitudinal axis direction in which the inclined parts merge can be further improved.

The inclined parts are preferably formed in the second region.

By this constitution, the first region and the second region are allowed to have different retainability, so that the mounting orientation of the stud pin into a pin hole can be freely selected in accordance with the difference in body shape, place of use, and the like.

The base is preferably formed in such a manner to extend from the body in its whole circumference in a plan view.

By this constitution, the retainability attributed to the base can be improved.

The body preferably has a tapered surface on the upper-end periphery.

According to this constitution, when driving on a dry road surface, the tapered surface is the part of the body that collides with the road surface, so that the impact force that acts on the road surface in this process can be mitigated. Therefore, the occurrence of road surface cracking and the like can be suppressed.

As another means for solving the above-described problem, the present invention provides a stud tire comprising: the stud pin according to any one of the above-described constitutions; and pin holes which are formed on a tread portion and in which the stud pin is mounted.

### ADVANTAGEOUS EFFECTS OF INVENTION

According to the present invention, since the body has a cylindrical shape, the degree of adhesion with the inner surfaces of pin holes can be increased and the retainability can thereby be improved. In addition, since the linear part is formed on the base to allow the base to have an asymmetrical shape, the retainability can be improved in various directions in accordance with the difference in the mounting orientation in the pin holes. As a result, the edge effect attributed to the upper-end periphery of the body can be sufficiently exerted.

### BRIEF DESCRIPTION OF DRAWINGS

FIG. 1 is a perspective view illustrating a stud pin according to one embodiment of the present invention.
FIG. 2 is a front view of the stud pin illustrated in FIG. 1.
FIG. 3 is a plan view of the stud pin illustrated in FIG. 1.
FIG. 4 is a developed view of a tread portion of a tire on which the stud pin illustrated in FIG. 1 is mounted.
FIG. 5 is a cross-sectional view of one of the pin holes illustrated in FIG. 4.
FIG. 6 is a plan view illustrating a stud pin according to another embodiment.

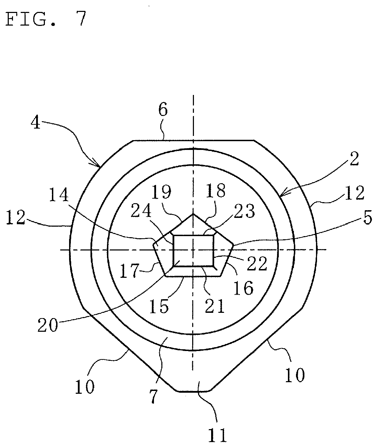

FIG. 7 is a plan view illustrating a stud pin according to yet another embodiment.

### DESCRIPTION OF EMBODIMENTS

Embodiments of the present invention will now be described referring to the attached drawings. In the following descriptions, terms each indicating a specific direction or position (e.g., terms including "upper", "lower", "side", "end") are used as necessary. These terms are used to facilitate the understanding of the invention with reference to the drawings, and the technical scope of the present invention should not be limited by the meanings of these terms. Further, the descriptions provided below are essentially nothing but exemplifications of the present invention and are not intended to limit the present invention, its application, or its use. Moreover, the drawings are schematic, and the dimensional ratios and the like differ from the actual ones.

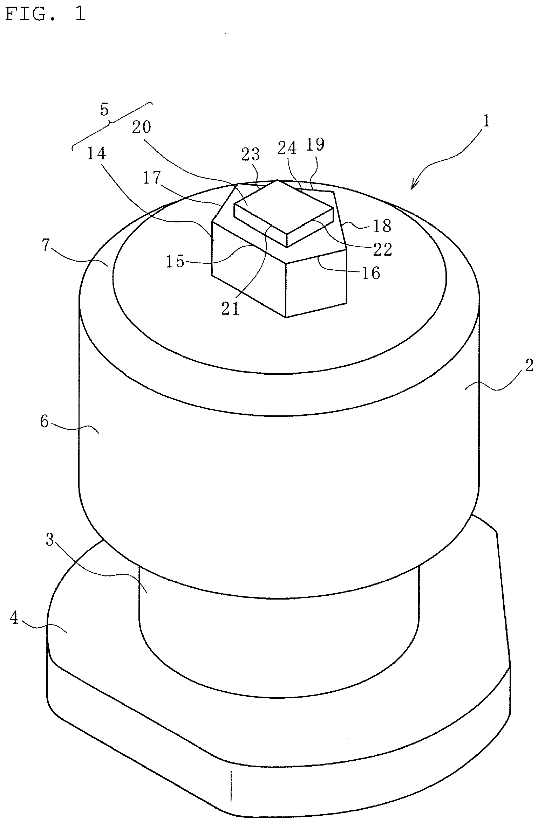

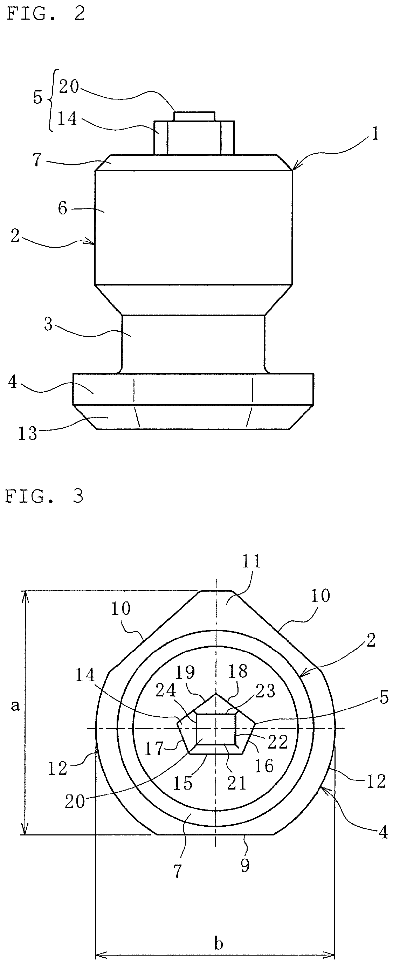

FIGs. 1 and 2 illustrate a stud pin 1 according to a first embodiment of the present invention. The stud pin 1 is formed by, for example, molding aluminum, an aluminum alloy or the like, and is constituted by: a body 2; a shank 3 extending on a lower side of the body 2; a base 4 further extending on a lower side of the shank 3, and a shaft 5 arranged on a center part of the upper surface of the body 2.

The body 2 is formed in a cylindrical shape that extends along a center axis. The term "center axis" used herein means a center, assuming that the body 2 has a true circular shape in a plan view. By forming the body 2 in a cylindrical shape, when the stud pin is mounted in pin holes 26 of a pneumatic tire as described below, the outer circumferential surface of the body 2 can be tightly adhered to the inner circumferential surface of each pin hole, so that the mounted state can be stabilized and the fall-off resistance can thereby be improved. It is noted here, however, that the body 2 is not restricted to be cylindrical and may be configured to have a polygonal shape connected by plural line segments in a plan view. In this case, it is required that the length of each line segment be sufficiently short, i.e., the polygonal shape be nearly circular such that the body 2 substantially uniformly adheres to the inner circumferential surface of each pin hole 26.

The upper-surface periphery of the body 2 is constituted by a tapered surface 7. The tapered surface 7 is a region that initially comes into contact with the road surface when a pneumatic tire (stud tire) on which the stud pin 1 is mounted is driven on a road. In this embodiment, the tapered surface 7, which is formed on the upper-end periphery of the side surface 6, is the region that initially collides with the road surface. Accordingly, the tapered surface 7 makes a surface contact when the upper-end periphery of the body 2 collides with the road surface. It is noted here, however, that the term "tapered surface 7" used herein is construed to encompass a slightly curved surface shape as long as a pointed part thereof can be prevented from colliding with the road surface.

As illustrated in FIG. 3, the base 4 is arranged such that its center axis is aligned with the center axis of the body 2. In addition, the base 4 is formed in a longitudinally elongated shape whose maximum length "a" in the longitudinal axis direction and maximum length "b" in the transverse axis direction satisfy a > b in a plan view. On the side of one end of the longitudinal axis direction of the base 4, namely in the first region, a linear part 9 parallel to the transverse axis perpendicular to the center axis of body 2 in a plan view is formed. Further, in the base 4, a protruding part 11 which protrudes in a triangular shape is formed by two inclined parts 10 on the opposite side from the linear part 9, namely in the second region. In this embodiment, the protruding part 11 is bilaterally symmetrical about the longitudinal axis. Moreover, an angle formed by each inclined part 10 with a longitudinal center line is set to be smaller than 90°. This angle is particularly preferably 45°. The two parts connecting the linear part 9 and the respective inclined parts 10 constitute arc-shaped parts 12. These parts are all connected via arc-shaped surfaces such that no edge is formed therebetween. On the lower surface of the outer periphery of the base 4, a tapered surface 13 is formed.

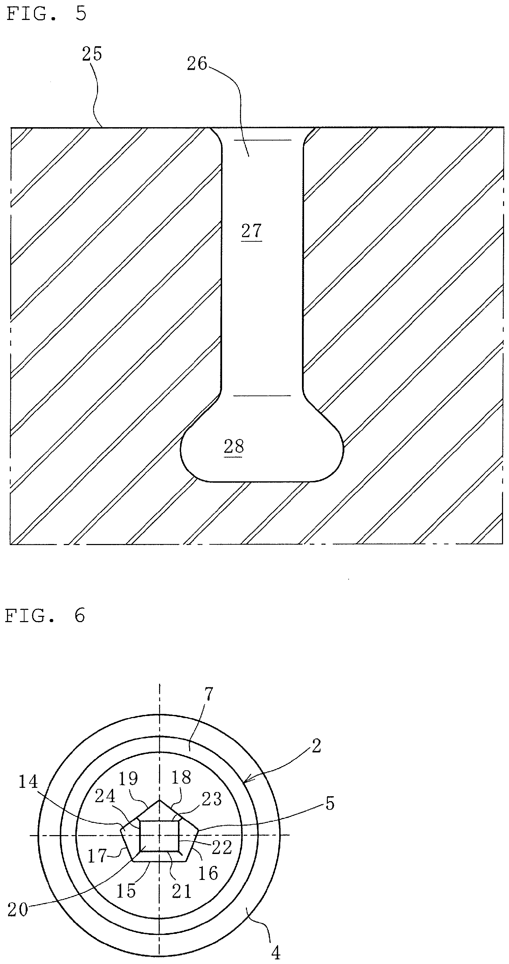

The shape of the base 4 is not restricted to the one described above, and the base 4 may take various forms such as a circular shape and a polygonal shape, as long as the base 4 extends to the outer side than the entire outer periphery of the body 2 in a plan view. FIG. 6 illustrates an example in which the base 4 is circular in a plan view. However, as described above, by forming the base 4 in a heterogeneous shape, dislodgement of the stud pin 1 from the pin holes 26 during driving on a road can be effectively inhibited in a state where an increase in weight is suppressed and the stud pin 1 is mounted on a tire.

The shaft 5 comprises a first protrusion 14 which has an odd-numbered polygonal shape in a plan view (a pentagonal shape in this case). A first edge 15, which includes one side (edge) of the first protrusion 14, is formed parallel to the linear part 9 of the base 4. A second edge 16 and a third edge 17, which are adjacent to the first edge 15 on the respective sides thereof, face the arc-shaped part of the base 4. Further, a fourth edge 18 adjacent to the second edge 16 and a fifth edge 19 adjacent to the third edge 17 face the respective inclined parts 10 of the base 4.

On the upper surface of the first protrusion 14, a second protrusion 20 is formed. The second protrusion 20 has a rectangular shape in a plan view, and one of its long sides constitutes a sixth edge 21, which is parallel to the first edge 15 of the first protrusion 14. It is noted here that other edges of the second protrusion 20 (a seventh edge 22, an eighth edge 23, and a ninth edge 24) extend in different directions from the other edges of the first protrusion 14.

The shaft 5 is arranged such that its center axis is aligned with the center axis of the body 2. By this, a sufficient distance can be ensured between the outer periphery of the body 2 and the shaft 5 in all directions. In addition, the second protrusion 20 has a smaller number of edges than the first protrusion 14. Specifically, the first protrusion 14 has five edges, while the second protrusion 20 has four edges. Moreover, in this embodiment, the height of the shaft 5 is from 0.5 mm to 2.5 mm. The reason for this is that the shaft 5 cannot sufficiently exert its functions at a height of less than 0.5 mm, and the shaft 5 contacts the ground before the body 2 and is thus likely to be damaged at a height of greater than 2.5 mm. Furthermore, the height ratio of the second protrusion 20 with respect to the first protrusion 14 is set to be 10% to 80%. The edge effect of the second protrusion 20 is insufficient when the height ratio is lower than 10%, and the first protrusion 14 cannot sufficiently exert an edge effect when the height ratio is higher than 80%.

By configuring the shaft 5 to have two steps in this manner, the total edge length can be increased, so that a sufficient edge effect can be exerted. In addition, since the edges of the first and the second protrusions 14 and 20 that extend in various directions collide with the road surface, an edge effect can be exerted not only in a straight direction but also in various directions during cornering and the like. It is noted here that the shaft 5 may be constituted by three or more steps as well.

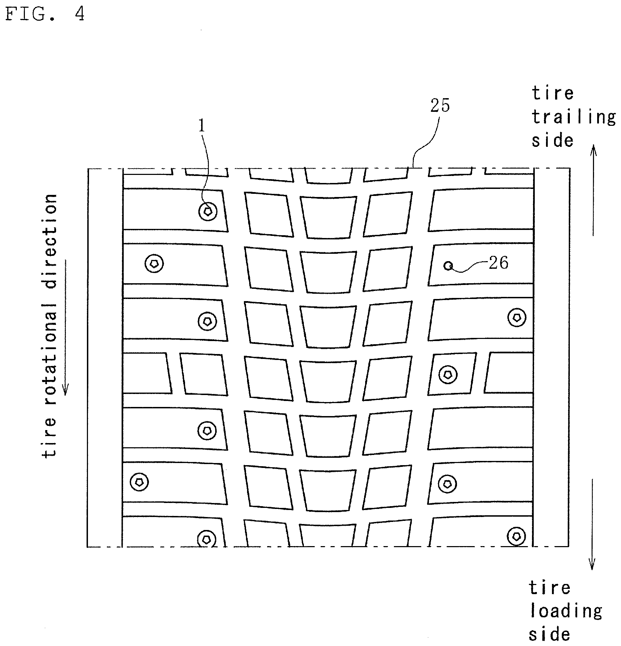

As illustrated in FIG. 4, the stud pin 1 having the above-described constitution is used by being mounted into the pin holes 26 formed on a tread portion 25 of a stud tire. As illustrated in FIG. 5, the pin holes 26 are each constituted by a small-diameter part 27 having the same inner diameter and a large-diameter part 28 on the tip thereof. An operation of mounting the stud pin 1 into each pin hole 26 is automatically performed by a pin driving device (not illustrated). In this case, the base 4 has the above-described longitudinally elongated heterogeneous shape, not a point-symmetrical shape such as a circular shape; therefore, the orientation of the stud pin 1 can be easily understood and the stud pin 1 can thus be accurately mounted into each pin hole 26. In this embodiment, a first side surface of the shaft 5 is positioned on the tire trailing side such that it extends in the tire widthwise direction perpendicular to the tire circumferential direction. In this state, a part of the stud pin 1 above the upper end (tapered surface 7) of the body 2 is exposed from the surface of the tread portion 25.

According to the stud pin 1 mounted on a tire in this manner, during driving, the upper-end periphery of the body 2 initially collides with the road surface. This upper-end periphery of the body 2 is constituted by a tapered surface. Therefore, even when the upper-end periphery of the body 2 collides with the road surface, the impact force applied per unit area of the road surface can be reduced. As a result, problems such as road surface cracking can be avoided even when driving on a dry road surface.

The shaft 5 subsequently collides with the road surface. In this case, a sufficient distance is secured between the body 2 and the shaft 5. Therefore, the shaft 5 is prevented from colliding with the road surface before the body 2. As a result, damage to the shaft 5 caused by collision with the road surface can be inhibited.

The shaft 5 that collides with the road surface is constituted by two steps, and the first protrusion 14 and the second protrusion 20 have different directions of surrounding pointed sides except at one spot. Therefore, the edge effect of the shaft 5 can be sufficiently exerted. In other words, in straight driving, the first edge 15 acts on the road surface (icy surface). Further, when cornering a curve, the second edge 16 or the third edge 17 inhibits skidding on the road surface. Moreover, when the brake is applied, the fourth edge 18 and the fifth edge 19 apply a braking force against the road surface.

In these processes, a force that causes the stud pin 1 to fall out of the pin hole 26 acts on the stud pin 1 through the body 2 and the shaft 5. In the stud pin 1, the body 2 is cylindrical, and its whole circumference uniformly adheres to the inner circumferential surface of the small-diameter part 27 of the pin hole 26. In addition, the stud pin comprises the shank 3 having a smaller diameter than the body 2 and the base 4 having a larger diameter than the body 2 connected to the shank 3. Therefore, dislodgement of the stud pin 1 from the pin hole 26 is effectively inhibited.

The edge performance was tested using the stud pin of Comparative Example, whose body 2, base 4 and shaft 5 all have circular shapes in a plan view, as well as the stud pin of Example that is illustrated in FIGs. 1 to 3. As test tires, tires having a size of 195/65R15 and an air pressure Fr/Re of 220/220 (kPa) were used. In the test, the test tires were mounted on a test vehicle (1,500 cc, 4WD mid-size sedan), and this test vehicle was driven on an icy road surface to evaluate the edge performance (drive performance, braking performance and turning (cornering) performance). For the evaluation of the edge performance, Example 1 was evaluated as an index, taking the edge performance of Comparative Example 1 as 100. The drive performance was evaluated in terms of the elapsed time required for the driving distance to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

The evaluation results are as shown in Table 1.

**[Table 1]**

| | Comparative Example | Example |
|---|---|---|
| Shaft cross-sectional shape | | |
| First step | circular | pentagonal |
| Second step | circular | quadrangular |
| Fall-off resistance | | |
| Longitudinal axis direction | 100 | 108 |
| Oblique direction | 100 | 106 |
| Transverse axis direction | 100 | 100 |
| Drive performance | 100 | 103 |
| Braking performance | 100 | 107 |
| Turning performance | 100 | 103 |

As shown above, in Example, the fall-off resistance was improved in all directions except the transverse direction by the base 4 having a longitudinally elongated asymmetrical shape.

It is noted here that the present invention is not limited to the constitutions of the above-described embodiment, and a variety of modifications can be made.

In the above-described embodiment, the first edge 15 of the first protrusion 14 of the shaft 5 is arranged on the tire trailing side such that it extends perpendicular to the tire circumferential direction along the tire widthwise direction; however, the first edge 15 may be arranged on the tire leading side as well. This makes it easier for the first edge 15 to exert a braking force.

Further, in the above-described embodiment, the shaft 5 has an odd-numbered polygonal shape in a plan view; however, the shaft 5 may also be constituted by a single linear part and other arc-shaped part. In this case, the arc-shaped part may have a substantially circular arc shape connected by plural line segments shorter than the linear part.

In the above-described embodiment, the parallel parts of the two-stepped shaft 5 and the linear part 9 of the base 4 are arranged in one of the regions divided in the longitudinal axis direction by the transverse axis; however, they may be arranged on the opposite sides as well.

### DESCRIPTION OF SYMBOLS

- 1:: stud pin
- 2:: body
- 3:: shank
- 4:: base
- 5:: shaft
- 7:: tapered surface
- 9:: linear part
- 10:: inclined part
- 11:: protruding part
- 12:: arc-shaped part
- 13:: tapered surface
- 14:: first protrusion
- 15:: first edge
- 16:: second edge
- 17:: third edge
- 18:: fourth edge
- 19:: fifth edge
- 20:: second protrusion
- 21:: sixth edge
- 22:: seventh edge
- 23:: eighth edge
- 24:: ninth edge
- 25:: tread portion
- 26:: pin hole
- 27:: small-diameter part
- 28:: large-diameter part

## Claims

1. A stud pin comprising:
a cylindrical body extending in a center axis direction; and
a base arranged on the side of one end of the body, which base in a plan view is divided into a first region and a second region by a transverse axis perpendicular to the center axis and is formed asymmetrically about the transverse axis by formation of a linear part parallel to the transverse axis on the outer periphery of the first region.

2. The stud pin according to claim 1, wherein the base has a greater length in a longitudinal axis direction perpendicular to the transverse axis than in the transverse axis direction in a plan view.

3. The stud pin according to claim 1 or 2, wherein the base comprises inclined parts that are inclined toward the longitudinal axis from the respective sides of the transverse axis direction.

4. The stud pin according to claim 3, wherein the inclined parts are formed in the second region.

5. The stud pin according to any one of claims 1 to 4, wherein the base is formed in such a manner to extend from the body in its whole circumference in a plan view.

6. The stud pin according to any one of claims 1 to 5, wherein the body comprises a tapered surface on the upper-end periphery.

7. A stud tire comprising:
the stud pin according to any one of claims 1 to 6; and
pin holes which are formed on a tread portion and in which the stud pin is mounted.
